Europäisches Patentamt

European Patent Office

Office européen des brevets

(11) Publication number: **0 144 115**
**B1**

(12) EUROPEAN PATENT SPECIFICATION

(45) Date of publication of patent specification: **31.01.90**

(51) Int. Cl.⁵: **G 01 N 21/21, G 01 B 11/06**

(21) Application number: **84303871.2**

(22) Date of filing: **07.06.84**

(54) An ellipsometer.

(30) Priority: **07.12.83 JP 229864/83**

(43) Date of publication of application:
**12.06.85 Bulletin 85/24**

(45) Publication of the grant of the patent:
**31.01.90 Bulletin 90/05**

(84) Designated Contracting States:
**DE FR GB**

(73) Proprietor: **TOHOKU UNIVERSITY**
**1-1, Katahira 2-chome**
**Sendai City Miyagi Prefecture (JP)**

(72) Inventor: **Yamamoto, Masaki**
**3-9-42, Maruyama 1-chome**
**Tagajyo City Miyagi Pref. (JP)**

(74) Representative: **Senior, Alan Murray et al**
**J.A. KEMP & CO 14 South Square Gray's Inn**
**London WC1R 5EU (GB)**

(56) References cited:

REVIEW OF SCIENTIFIC INSTRUMENTS, vol. 53, no. 7, July 1982, pages 969-977, New York, US; B. DREVILLON et al.: "Fast polarization modulated ellipsometer using a microprocessor system for digital fourier analysis"

APPLIED OPTICS, vol. 18, no. 22, November 1979, pages 3851-3856, New York, US; B. VIDAL et al.: "Wideband optical monitoring of nonquarterwave multilayer filters"

(56) References cited:

MICROELECTRONICS JOURNAL, vol. 9, no. 3, January-February 1979, pages 27-30, Luton, GB; D. DAVIES et al.: "Ellipsometry - a versatile and non-destructive testing technique"

IBM TECHNICAL DISCLOSURE BULLETIN, vol. 21, no. 2, July 1978, pages 855-856, New York, US; E.P. HARRIS et al.: "Signal level regulation and dark current compensation for wavelength-scanning ellipsometer

(56) References cited:

**SOLID STATE TECHNOLOGY, vol. 21, no. 2,
February 1978, pages 43-47, New York, US; R.J.
KUTKO "Ellipsometry for semiconductor
process control"**

**REVUE DE PHYSIQUE APPLIQUEE, vol. 18, no.
11, November 1983, pages 709-717, Orsay, FR;
C. ALIBERT et al.: "Electroréflexion et
ellipsométrie spectroscopique
d'hétérostructures In GaAsP/InP et
GaA1As/GaAs"**

## Description

This invention relates to an ellipsometer, and more particularly to an ellipsometer of channelled spectrum type in which the frequency of the incident light to a specimen and emergent light therefrom is varied and measured.

Recently, rapid progress has been made in research and development of thin films, such as thin silicon oxide films used in semiconductor elements. To facilitate further progress, there is a pressing need for the development of a non-destructive method of accurately measuring the optical properties of thin films. Ellipsometry is a very important method in the research and development of various materials inclusive of thin films, because it facilitates accurate measurement of optical constants of materials and thin films deposited on the surface thereof in a non-destructive manner.

The principles of ellipsometry will be reviewed briefly. When a monochromatic light beam becomes incident to the surface of a thin film deposited on a substrate with an angle of incidence of $\phi$, the thin film having a thickness of $d_f$ and a relative index $n_f$ and said substrate has a refractive index $n_s$, the light is reflected both at the boundary between the air and the thin film and at the boundary between the thin film and the substrate. It is known that the net reflected light has an s-direction component with an amplitude reflection coefficent $R_s$ and a p-direction component with an amplitude reflection coefficient $R_p$, the s-direction component of the reflected light having an electric field vector perpendicular to the plane of incidence and the p-direction component of the reflected light having an electric field vector on the plane of incidence, which coefficients $R_s$ and $R_p$ are given by the following equations of complex variables.

$$R_s = r_s \exp(i\delta_s) = \frac{r_{1s} + r_{2s} \cdot \exp(i\delta)}{1 + r_{1s} \cdot r_{2s} \exp(i\delta)}$$

$$R_p = r_p \exp(i\delta_p) = \frac{r_{1p} + r_{2p} \cdot \exp(i\delta)}{1 + r_{1p} \cdot r_{2p} \exp(i\delta)}$$

here,

$$\delta = \frac{4\pi d_f}{\lambda} \sqrt{n_f^2 - \sin^2\phi}$$

The quantity $\delta$ represents the phase difference caused by the two-way travel of the light across the thickness of the thin film. The symbols $r_{1p}$ and $r_{1s}$ represent a p-direction component and an s-direction component of the amplitude reflection coefficient (Fresnel coefficient) at the boundary between the air and the thin film, while the symbols $r_{2p}$ and $r_{2s}$ represent a p-direction component and an s-direction component of the amplitude reflection coefficient at the boundary between the thin film and the substrate. Such amplitude reflection coefficients are functions of the angle of incidence $\phi$ and refractive indices of the materials at the boundaries. The state of polarization of the reflected light is determined by the complex relative amplitude attenuation $\rho$, which is the ratio $R_p/R_s$ given by the following complex variable equation.

$$\frac{R_p}{R_s} = \frac{r_p}{r_s} \exp[i(\delta_p - \delta_s)] = \tan\psi \cdot \exp(i\Delta) = \rho \qquad (1)$$

here, $\Delta$ represents the relative phase change between the p-direction component and the s-direction component of the quantity $\delta$.

The foregoing equations show that the relative amplitude attenuation $\rho$ is a function of the optical properties of the thin film, so that such properties of the thin film can be determined by measuring the quantity $\rho$. To measure the above-mentioned relative amplitude attenuation $R_p/R_s$, there are two groups of ellipsometric methods available; namely, ($\Delta$–$\tan\psi$) methods in which the variables to be measured are the relative phase change $\Delta$ and the relative amplitude attenuation $\tan\psi$ between the p-direction component and the s-direction component of the reflected light, and ($\phi_p$–$\rho_p$) methods (or principal angle of incidence methods) in which the variables to be measured are the principal angle of incidence $\phi_p$ giving $\Delta = \pm\pi/2$ and the relative amplitude attenuation $\rho_p$ for that principal angle of incidence. Every one of the above-referred methods measures variable quantities such as the refractive index $n_s$, the complex relative amplitude attenuation $\rho$, the angle of incidence $\phi$, and the wavelength $\lambda$ of the incident light. Thus, it is very important how accurately one measures the above variable quantities.

Either an extinction method or a photometric method can be used for the measurement of the above-referred variable quantities. The extinction method adjusts a polarizer and an analyzer so as to form a cross nicol which eliminates light transmission, and a light detector detects such elimination of light transmission, i.e., extinction of light on the output side of the analyzer. In the photometric methods, the analyzer is rotated while the polarizer is fixed together with an associated compensator, or the

3

compensator is rotated while the polarizer and the analyzer are fixed, so as to measure the output from the analyzer by converting it into electric A.C. signals.

The extinction method has shortcomings in that the adjustment of optical elements is complicated, that the presence of a high degree of freedom in the extinction tends to make the analysis complicated, and that in the case of a thick film the presence of multiple solutions of the complex terms tends to make the thickness determination difficult.

The photometric method has a shortcoming in that high accuracy is difficult to obtain because the method involves many factors which tend to cause errors such as the fluctuation of the luminous intensity of the light source.

Besides, both the extinction method and the photometric method use a phase compensator such as a quarter-wave plate. As compared with the polariser and the analyser, a phase compensator with an sufficiently high accuracy is hard to manufacture as an optical element, so that the overall accuracy of the methods is unduly limited by the accuracy of the phase compensator.

The article "Fast polarisation modulated ellipsometer using a microprocessor system for digital Fourier analysis" by Drevillon et al (Review of Scientific Instruments Vol. 53 (1982), July, No. 7, New York, USA, pp 969—977) discloses an example of a prior ellipsometer, operating according to a photometric method and requiring the use of a photoacoustic modulator in the source light path.

The article "Elipsometry—a versatile and non-destructive testing technique" by Davies and Popor (Microeletronics Journal, Vol. 9, No. 3, 1979, Luton, UK, pp 27—30) discloses an example of an ellipsometer corresponding to the precharacterising part of claim 1 and operating according to an extinction method.

The importance of spectrometry is increasing, and there is a strong need for the development of simply operatable and highly accurate spectroscope ellipsometer, such as a channelled spectrum ellipsometer which facilitates the measurement of the optical constants of substances and thin films by adjusting the wavelength.

Another object of the present invention is to provide a spectroellipsometer or a channelled spectrum ellipsometer which facilitates the measurement of the optical constants of substances and thin films by adjusting the wavelength of incident light.

A further object of the present invention is to provide an ellipsometer which has a low degree of freedom of extinction and facilitates the measurement of the optical constants of specimens with a low extinction coefficient and thick film specimens.

According to a first aspect of the invention, there is provided an ellipsometer, comprising a light source, a polariser adapted to polarise light from the light source, means for holding a specimen in such a manner that polarised light from said polariser becomes incident to the specimen, a combination of an analyser and light detector disposed in the path of emergent light from said specimen in response to said incident light, characterised in that said light source emits white light and a spectroscope is disposed in an optical path of the light to measure a wavelength at which a phase difference of O or $\pi$ is produced between s-direction and p-direction components of light which has impinged on said specimen.

The invention also provides a method of use of the ellipsometer according to the first aspect of the invention, comprising the step of operating the ellipsometer to subject the specimen to polarised light from the light source and characterised by the steps of operating the spectroscope to measure a wavelength at which a phase difference of O or $\pi$ is produced between s-direction and p-direction components of light from the specimen and determining the complex amplitude relative attenuation at that measured wavelength.

As will become apparent from the following description, the present invention provides an improved ellipsometer of simple construction which facilitates high-accuracy measurement which does not need although may if desired include) a phase compensator such as a quarter-wave plate.

For a better understanding of the invention, reference is made to the accompanying drawings, in which:

Fig. 1 is a schematic diagram of an optical system which is used in the explanation of ellipsometry;

Fig. 2 is a schematic block diagram showing the construction of an ellipsometer of the prior art;

Fig. 3 is a schematic block diagram showing the construction of an ellipsometer according to the present invention;

Fig. 4 is a graph of a Gaussian plane, showing the variation of complex relative amplitude attenuation of a thin film specimen;

Fig. 5 is a schematic block diagram of an ellipsometer according to the invention which was used in experiments described hereinafter;

Fig. 6 is a graph showing the optical properties of a thin film specimen of magnesium fluoride ($MgF_2$), as measured by an ellipsometer of the invention while keeping the azimuthal angle $\theta_A$ of an analyzer of the ellipsometer at $-10.04°$ and at $-0.60°$;

Fig. 7 is a graph showing the theoretical values of the optical properties of the thin film specimen of magnesium fluoride ($MgF_2$) under the conditions of the analyzer azimuthal angle $\theta_A$ at $-10.04°$ and at $-1.15°$.

Fig. 8 is a graph showing the dispersion of the refractive index $n(\lambda)$ of magnesium fluoride ($MgF_2$) for different wavelengths; and

Fig. 9 is a graph showing the thickness $d_f$ of a magnesium fluoride ($MgF_2$) specimen as measured at different wavelengths.

Throughout different views of the drawings, 1, 11, 21 are light sources, 2, 12, 22 are collimators, 3, 13, 23 are polarizers, 4, 14, 24 are specimens, 5 is a phase compensator, 6, 15, 25 are analyzers, 7 is a telescope, 8, 17 are light detectors, 16 is a spectroscope, and 26 is a spectrometer.

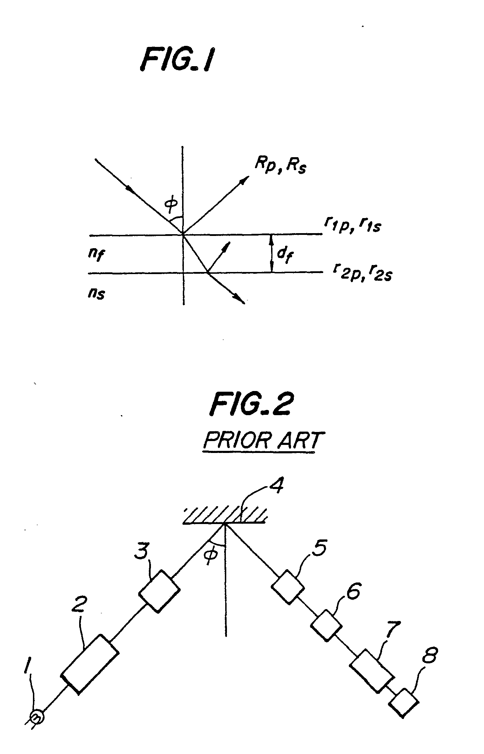

Referring to Fig. 1 and Fig. 2, ellipsometry of the prior art will be briefly reviewed. Fig. 1 shows a thin film with a refractive index $n_f$ and a thickness $d_f$ deposited on a substrate with a refractive index $n_s$. When a monochromatic light beam is directed to the surface of the thin film with an angle of incidence $\phi$, the state of polarization of the reflected light is determined by the relative amplitude attenuation $\rho$, which is the ratio between $R_p$ and $R_s$ given by the above-mentioned equation (1) of complex variables.

Fig. 2 schematically shows a conventional optical system for measuring the optical constants and variables satisfying the relationship of the equation (1); such as the refractive indices $n_s$, $n_f$, the thin film thickness $d_f$, the angle of incidence $\phi$, and the wavelength $\lambda$ of the incident light. In the figure, the light emanating from the light source 1 is converted into monochromatic light of parallel rays by a collimator 2 including a transmission filter, which light enters a polarizer 3. After being linearly polarized by the polarizer 3, the light becomes incident on the specimen 4. The specimen 4 reflects the incident light, and the reflected light is, in general, elliptically polarized. The elliptically polarized light is converted into linearly polarized light by a compensator 5, and the thus converted light passes through an analyzer 6 and a telescope 7 so as to be detected by a light detector 8.

In the extinction method, the polarizer 3 and the analyzer 6 are regulated in such a manner that light passing through the analyzer 6 is extinguished (cross nicol arrangement). The light detector 8 detects the extinction of light from the analyzer 6. On the other hand, in the photometric method, both the polarizer 3 and the compensator 5 are kept stationary, and the azimuthal angle of the analyzer 6 is varied at a constant rate so as to rotate the analyzer 6, and the output from the light detector 8 is converted into an alternating current (AC) signal for measurement.

The extinction method finds the state of light extinction so that it has an advatange of high accuracy because it is free from errors due to fluctuation of the luminous intensity of the light source and non-linearity in the operating characteristics of the detector. However, the extinction method has shortcomings in that the adjustment of optical elements is complicated, that the analysis of output is complicated due to the high degree of freedom of the light extinction, and that the determination of the thickness of thick film specimens is difficult due to the occurrence of multiple solutions for complex terms. The photometric method has a shortcoming in that high accuracy is hard to achieve, because it involves a number of factors which tend to cause errors such as fluctuation of the luminous intensity of the light source.

Besides, both of the methods use the compensator 5 such as a quarter-wave plate for phase compensation, and an accurate compensator 5 is difficult to produce as compared with the polarizer 3 and the analyzer 6, and the overall accuracy of the measuring system is restricted by the accuracy of the compensator 5. Thus, the compensator 5 is a cause of difficulty in improving the accuracy of the measurement.

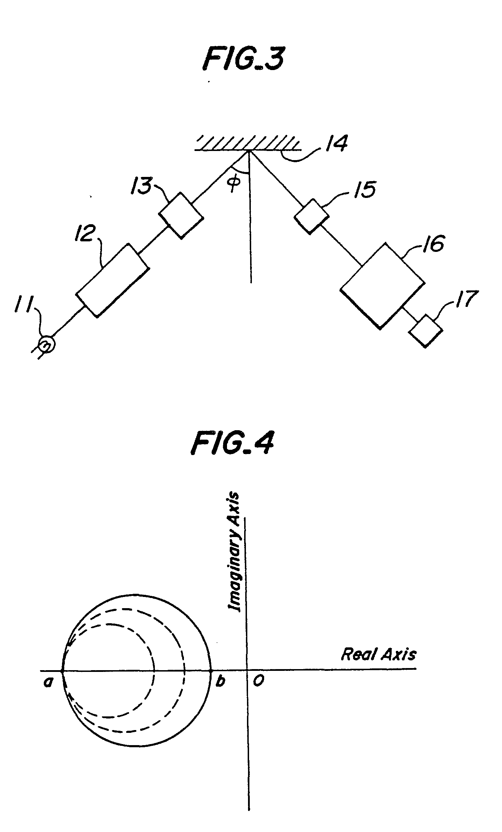

Fig. 3 schematically shows the construction of an embodiment of the ellipsometer according to the present invention. In this embodiment, a light source 11 of white light is used. The light from the white light source 11 is converted into parallel rays by a collimator 12 and then linearly polarized by a polarizer 13, so that thus polarized light becomes incident to a specimen 14 held by a suitable specimen holder (not shown). When the rays of the linearly polarized light become incident to the specimen 14, the light reflected from the specimen 14 is polarized depending on the relative amplitude attenuation $\rho$. The relative amplitude attenuation $\rho$ varies with the wavelength of the incident light, and the reflected light from the specimen 14 becomes an aggregate of differently polarized rays depending on the wavelength.

The reflected light consisting of differently polarized rays enters an analyzer 15, and its component in the direction of the axis of transmission of the analyzer 15 is transmitted, and the emergent light, or white light with its intensities changed depending on wavelengths, becomes incident to a spectroscope 16. Different wavelength components of the incident light to the spectroscope 16 pass therethrough one by one in response to the operator's adjustment thereof, and the output from the spectroscope 16 becomes incident to a light detector 17. In this embodiment, both the polarizer 13 and the analyzer 15 are to effect linear polarization.

The manner in which the luminous intensity of the output from the analyzer 15 varies represents the state of polarization of the different wavelength components of the incident light thereto. Accordingly, if the reflected light from the specimen 14 includes linearly polarized rays of certain wavelengths, such rays can be extinguished by adjusting the azimuthal angle of the analyzer 15. The extinction of the rays of light can be observed by the light detector 17.

Thus, when both the polarizer 13 and the analyzer 15 used are to cause linear polarization, that wavelength which produces a relative amplitude attenuation $\rho$ with a real part only can be determined, and the inclination of the plane of vibration of linearly polarized rays reflected at the specimen 14 can be measured with the same accuracy as that of the extinction method. In this case, the azimuthal angle of the analyzer 15 and the wavelength dial of the spectroscope 16 can be alternately adjusted, so that the state of extinction can be detected by the light detector 17, and the wavelength of the reflected light of linearly polarized rays and the inclination of the plane of vibration of such wavelength light can be measured.

Now, the analytical method to be used with the ellipsometer according to the invention will be described. As compared with the ($\Delta$-tan$\psi$) methods and the principal incident angle methods described above, the analytical method used in the invention is featured in that it is a novel ellipsometry which measures two variables, namely the wavelength $\lambda$ producing a phase difference $\Delta$ of O or $\pi$ and the complex amplitude relative attenuation $\rho$ at the thus measured wavelength.

The analysis in the case of specimen with a transparent thin film will be explained. The complex relative amplitude attenuation $\rho$ of the above-mentioned equation (1) derived on the basis of multiple reflections and interferences can be plotted on a Guassian plane. Fig. 4 shows contour lines of the refractive index, or iso-refractive-index curves, indicating the variation of the complex relative amplitude attenuation $\rho$ for different thickness $d_f$ of the thin film, in which the abscissa is a real axis while the ordinate is an imaginary axis. The iso-refractive-index curves of Fig. 4 are for transparent thin films and they are substantially circular.

When the film thickness is zero, i.e., $d_f=0$, or when the spectrum has substrate only, the refractive index is at the point *a* on the Guassian plane, and when the relative phase change $\Delta$ is an odd multiple of $\pi$, the refractive index is at the point *b*. As the thickness $d_f$ varies, the value of the refractive index changes along the curve of Fig. 4 relative to the point *a* in a clockwise or counterclockwise direction. When the refractive index of the thin film varies, the contour moves to a different curve such as one of the broken line curves of Fig. 4, so that the intersection of the contour with the real axis, representing the relative phase change $\Delta$ in odd multiple of $\pi$, also moves.

More particularly, the ellipsometry of the present invention is to accurately measure the point where the relative amplitude attenuation $\rho$ assumes a real number, i.e., the intersection of the contour of Fig. 4 with the abscissa.

Although the variation of the relative amplitude attenuation $\rho$ in response to the change of the thickness $d_f$ of the thin film has been described by referring to Fig. 4, the same variation in response to the change of the wavelength $\lambda$ of the incident light can be also reckoned from Fig. 4, at least in a qualitative sense, by reading the thickness $d_f$ for the wavelength $\lambda$. The reason for it is that both the thickness $d_f$ and the wavelength $\lambda$ are included in the above-mentioned formula for the phase difference $\delta$ caused by the two-way travel of the incident light across the thickness of the thin film, and the variation of the refractive index for change in wavelength $\lambda$ is negligible.

Thus, in the case of transparent thin film, the relative phase change $\Delta$ between the p-direction component and s-direction component becomes O or $\pi$ at the intersections *a* or *b* between the contour and the real axis of Fig. 4, and then the reflected light from the specimen is linearly polarized. The inclination of the linearly polarized light can be determined from the relative amplitude attenuation $\rho(\lambda)$ as a function of an independent variable which is the wavelength $\lambda$ of the incident light. If the order of interference is represented by $m$, the above-mentioned quantities tan$\psi$ and sin$\Delta$ become functions of the wavelength $\lambda_m$ for such order $m$ of interference. The following conditions for the extinction can be derived from the phase conditions.

$$\text{Im}\rho=\tan\psi \cdot \sin\Delta=0$$

From amplitude condition,

$$\text{Re}\rho=\tan\psi \cdot \cos\Delta=\tan\psi_m=-\tan\theta_p \cdot \tan\theta_A$$

here, $\theta_p$ and $\theta_A$ represent azimuthal angles of the axes of the transmission of the polarizer 13 and the analyzer 15.

If the azimuthal angle of the polarizer 13 is kept constant at $\theta_p=-45°$, the tangent of the azimuthal angle of the analyzer 15 becomes equal to the amplitude ratio between the p-direction component and the s-direction component of the reflected light $\tan\psi=\tan\theta_A$. If the azimuthal angle $\theta_A$ satisfying the immediately preceding equation is represented by $\theta_m$, the point of extinction becomes a function of such azimuthal angle $\theta_m$ and the wavelength $\lambda_m$, which is equivalent to the conventional method of measuring such quantity $\tan\theta_A$ which gives $\Delta=O$ or $\pi$ for the wavelength $\lambda_m$ by using a conventional ellipsometer, $\Delta$ being the relative phase change between the p-direction component and the s-direction component.

The following condition for extinction can be derived from the phase conditions.

$$\delta(\lambda_m)=\frac{4\pi d_f}{\lambda_m}\sqrt{n(\lambda_m)^2-\sin^2\phi}=m_\pi \qquad (2)$$

here, $m$ being a positive integer.

From the amplitude conditions,

$$\tan\theta_m=\tan\psi_m=f(\cos\delta)$$

here,

$$f(\cos\delta)=\frac{r_{1p}+r_{2p}\cdot g}{1+r_{1p}\cdot r_{2p}\cdot g} \bigg/ \frac{r_{1s}+r_{2s}\cdot g}{1+r_{1s}\cdot r_{2s}\cdot g} \qquad (3)$$

$$g=\cos\delta$$

Accordingly, in the case of even order $m=2l$ (l being a positive integer), the following relation can be derived since $\cos\delta=1$.

$$\tan\theta_{2l}=\tan\psi_{2l}=f(1)=(r_{op})/(r_{os}) \qquad (4)$$

here, $r_{op}$ is the p-direction component of an amplitude reflection coefficient of the substrate alone and $r_{os}$ is the s-direction component of the amplitude reflection coefficient of the substrate alone, and $f(1)(r_{op})(r_{os})$ is a complex relative amplitude attenuation on the surface of the substrate.

On the other hand, in the case of odd order $m=2l+1$, the following relation can be derived since $\cos\delta=-1$.

$$\tan\theta_{2l+1}=\tan\psi_{2l+1}=f(-1) \qquad (5)$$

In practice, to determine the film thickness and the dispersions of the refractive index for different wavelengths, measurement is taken on the even order wavelengths, the azimuthal angles of the analyzer thereat ($\lambda_{2l}$, $\theta_{2l}$), the odd order wavelengths, and the azimuthal angles of the analyzer thereat ($\lambda_{2l+1}$, $\theta_{2l+1}$). Next, the interference order $m$ is determined by using the following formula.

$$m=(\lambda_{m+1})/(\lambda_m-\lambda_{m+1}) \qquad (6)$$

Thereafter, the refractive index $n(\lambda_{2l+1})$ at the wavelength ($\lambda_{2l+1}$) at the wavelength $\lambda_{2l+1}$ is determined from the measured data of the odd order by solving the following equation.

$$\tan\theta_{2l+1}=\tan\psi_{2l+1}=\frac{r_{1p}-r_{2p}}{1-r_{1p}\cdot r_{2p}} \bigg/ \frac{r_{1s}-r_{2s}}{1-r_{1s}\cdot r_{2s}}$$

Then, the thickness $d_f$ of the thin film is determined by the following formula.

$$d_f=\frac{(2l+1)\lambda_{2l+1}}{4\pi\sqrt{(n_{\lambda=2l+1})^2-\sin^2\phi}} \qquad (7)$$

Since the thin film thickness $d_f$ is indifferent to the wavelength of the incident light, the refractive index $n(\lambda_m)$ can be determined by the calculation using the following equation.

$$n(\lambda_m)=[(m\lambda_m/4\pi d_f)^2+\sin^2\phi]^{1/2} \qquad (8)$$

In the foregoing determination of the thin film thickness and the refractive index, the even order azimuthal angle $\theta_{2l}$ of the analyzer is not used. However, such even order azimuthal angle is used in the case of analyzing complicated optical systems which cannot be expressed in a simple form as shown in Fig. 1. For instance, it is useful in the analysis of an inhomogeneous optical system including a film whose refractive index is inhomogeneous in the thickness direction thereof. In the case of a film with an inhomogeneous refractive index, the point for phase difference $\Delta$ to become 0 or 2 mπ on the contour of the refractive index, such as that shown in Fig. 4, is shifted as described above. On the other hand, the odd order azimuthal angle $\theta_{2l+1}$ is ruled by the average refractive index of the film concerned, so that it is particularly useful in the analysis of a homgeneous film.

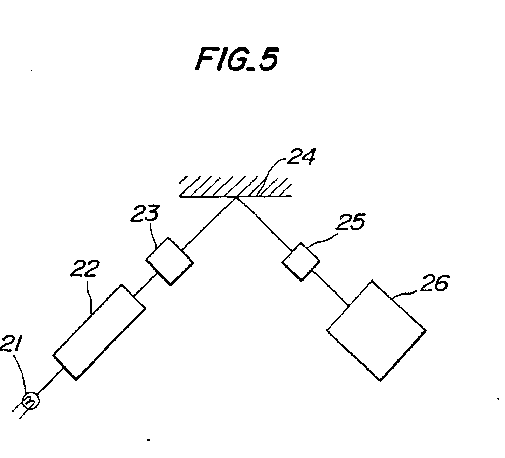

The invention will be described in further detail by referring to actual experiments. The optical system used in the experiments is shown in Fig. 5. In the experiments, the angle of incidence $\phi$ was set at 50.25°, and the light source 21 was a 150 W xenon lamp. The light emanating from the xenon lamp was made into parallel rays by a collimator 22 and then applied to a polarizer 23. The linearly polarized emergent light from the polarizer 23 became incident to a specimen 24. In the experiments, a specimen was prepared by vacuum evaporating a thin film of magnesium fluoride ($MgF_2$) on a wedge-shaped BK7 substrate.

The reflected light from the surface of the specimen 24 was applied to an analyzer 25, and the light transmitting through the analyzer 25 became incident to a spectrometer 26. As the azimuthal angle $\theta_A$ of the analyzer 25 was adjusted, spectra were produced at two azimuthal angles each of which spectra had distinct dark lines with certain spacings. The positions of the dark lines were light extinguishing positions.

In the experiments, wavelength scanning was carried out by turning the dial of the spectrometer 26 while keeping the azimuthal angle $\theta_A$ of the analyzer 25 at −10.04° and at −0.60°. The result is shown in Fig.

7

6, wherein the abscissa represents wavelength and the ordinate represents the output from the spectrometer 26. In the figure, the solid line shows the spectrum for the case of $\theta_A = -10.04°$, and the short dash line shows the spectrum for the case of $\theta_A = -0.60°$, while the dotted line shows the output from the spectrometer 26 in the case of substrate alone (without any thin film of $MgF_2$) under the conditions $\theta_A = -0.60°$.

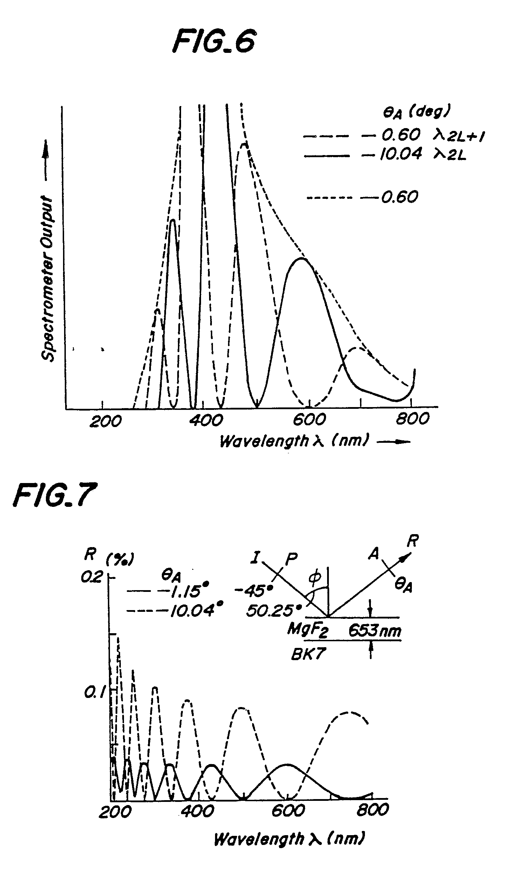

As explained above by referring to Fig. 4, linearly polarized light emerges from the specimen at two optical points in response to the incident light, namely at the intersections of the relative amplitude attenuation ρ and the real axis. In the experiments, the azimuthal angle $\theta_A$ of the analyzer 25 at $\theta_A = -10.04°$ corresponds to the point a of Fig. 4, while $\theta_A = -0.60°$ corresponds to the point b of the figure. Table 1 shows more exact data of the extinction points of Fig. 6.

TABLE 1

| m | $\lambda_m$(nm) | $\psi_{2l}$(deg) | $\psi_{2l+1}$(deg) |
|---|---|---|---|
| 4 | 773.0±2.3 | −9.64±0.22 | |
| 5 | 603.3±0.3 | | −1.15±0.15 |
| 6 | 509.2±0.5 | −10.04±0.09 | |
| 7 | 434.5±0.2 | | −0.56±0.07 |
| 8 | 383.6±0.3 | −10.36±0.05 | |
| 9 | 341.0±0.1 | | −0.40±0.14 |
| 10 | 309.5±0.3 | −10.71±0.10 | |
| 11 | 281.3±0.2 | | −0.72±0.29 |
| 12 | 264.6±1.0 | −8.30±0.30 | |
| 13 | 242.3±0.6 | | −2.68±0.37 |

The azimuthal angle $\theta_A$ in Table 1 was accurately determined as follows: namely, the azimuthal angle $\theta_A$ was at first fixed at −10.04° for finding out the wavelength λ for the light extinction, and the wavelength λ was fixed at the thus found value so as to adjust the polarizer to the exact azimuthal angle $\theta_A$. Similar adjustment was made in the case of the azimuthal angle of $\theta_A = -0.60°$. In Table 1, m represents the order of interference, $\lambda_m$ represents the wavelength for causing the light extinction, $\psi_{2l}$ represents the azimuthal angle of even order, and $\psi_{2l+1}$ represents the azimuthal angle of odd order.

Fig. 7 shows the theoretical value of the emergent light from the analyzer 25 of Fig. 5 for a specimen having a magnesium fluoride ($MgF_2$) thin film with a thickness $d_f$ of 653 nm deposited on a BK7 substrate under the condition of $\theta_A = -10.04°$ and $\theta_A = -1.15°$. In comparison of the spectra of Fig. 6 and the spectra of Fig. 7, the light extinction positions obtained by the experiment of the ellipsometer of the invention were in good agreement with those obtained by theoretical analysis, except wavelengths shorter than about 300 nm, i.e., λ≦ about 300 nm.

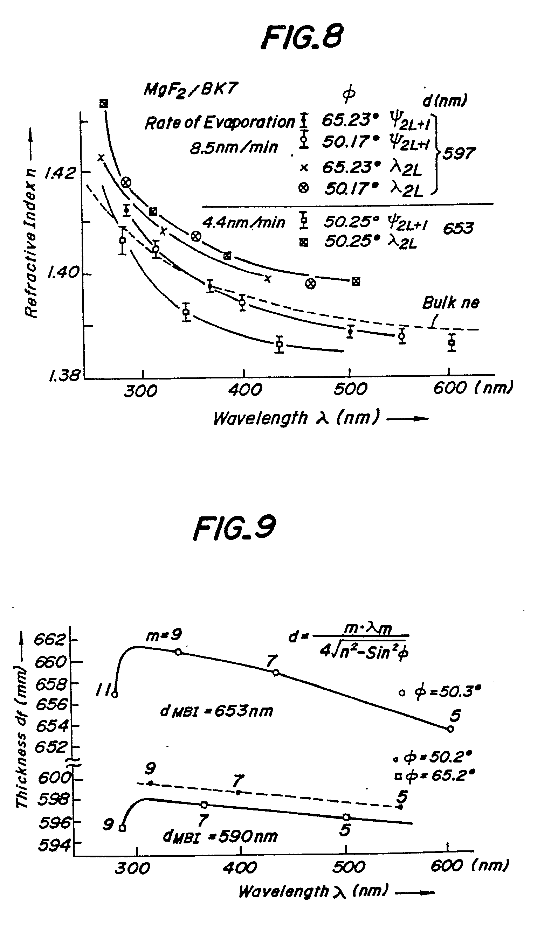

Fig. 8 shows the dispersion of the refractive index n(λ) with the variation of wavelength. In the figure, the abscissa represents the wavelength λ, while the ordinate represents the refractive index n. The measurement of the data of Fig. 8 was carried out by using two kinds of thin films, i.e., a 593 nm thick film and a 653 nm thick film, at 3 different angles of incidence φ, i.e., 65.23°, 50.17°, and 50.25°. The measured values at the wavelengths for interferences of even orders and odd orders are plotted in the figure. The short dash line curve with the symbol "bulk $n_e$" represents values of the refractive index for extraordinal light in the prism type sample of $MgF_2$.

Fig. 9 shows the measured thickness $d_f$ of the thin film with variation of the wavelength. In the figure, the abscissa represents the wavelength λ, while the ordinate represents the measured thickness $d_f$. The measurement of the data of Fig. 9 was carried out by using two different kinds of films, i.e., a 590 nm thick film and a 653 nm thick film as determined by the multiple beam interference method, at two angles of incidence θ, i.e., 50.2° and 65.2°. The solid lines represent the measured values for the angle of incidence φ of 50.2°, while the short dash line represents the measured values for the angle of incidence φ of 65.2°.

The measured thickness of Fig. 9 is in reasonably good agreement with that as determined by the multiple beam interference method. The measured value gradually decreased with the increase of the wavelength λ for the wavelength in excess 300 nm, i.e. for λ>300 nm. This gradual decrease appears to be due to the inhomogeneity of the specimen. On the other hand, in the wavelength region of λ<300 nm, the measured value rapidly decreased with decrease of the wavelength, possibly due to the absorption by the substrate BK7. Since the thickness $d_f$ of the film specimen is indiferent to the wavelength, the measurement by the ellipsometer according to the present invention will facilitate analysis of inhomogeny of a thin film.

As described in the foregoing, the present invention provides a novel ellipsometer which uses both the polarization and interference of light, so that the following outstanding effects can be achieved.

The conventionally used phase compensator, which is difficult to make with precision and apt to hamper the overall accuracy of measuring devices, can be dispensed with in the ellipsometer of the invention, so that accuracy of the measurement is improved accordingly.

Since the measuring method through detection of light extinguishing positions can be used in the ellipsometer of the invention, errors due to fluctuation of the light source brightness and the like can be eliminated, so that accuracy of the measurement can be further improved.

In the ellipsometer of the invention, a spectrometric method, which measures while varying the wavelength of the light incident to a specimen, can be used, so that the ellipsometer facilitates the analysis of the optical properties of a thin film over a range covering ultraviolet rays, visual rays, infrared rays, and microwaves. Thus, the invention providdes an effective tool for research and development of thin films. As a practicable spectrometry with high accuracy is developed, it becomes possible to effect optical analysis of inhomogeneous material, such as a material whose refractive index varies in the thickness direction. With the ellipsometer of the invention, the angle of incidence to the specimen can be varied for effecting the measurement with multiple angles of incidence in the above spectrometry, so that measurements can be taken with a large number of variable parameters, whereby the analysis of complicated optical systems is greatly facilitated.

Further, the ellipsometer of the invention can do with only two polarizers or nicols, so that freedom of light extinction is low and need for zone analysis is eliminated, and the operation of ellipsometry is made considerably easier as compared with that of the prior art.

The illustrated embodiment of the invention can be modified in a number of ways. For instance, the spectroscope, which is disposed after the analyzer in the embodiment of Fig. 3, can be disposed at any position on the optical path between the light source and the light detector so as to effect the same measurement as accomplished by the Fig. 3 embodiment.

In the illustrated embodiment, the state of polarization of the reflected light from the specimen is measured, the invention is not restricted to it. For instance, the state of polarization of the light transmitted through a specimen can be similarly measured by using the principles of the present invention.

Furthermore, polarized light other than linearly polarized light can be used in the ellipsometry of the present invention by disposing phase compensators before and/or after the specimen, but the use of such phase compensators may result in a reduction of the measuring accuracy.

## Claims

1. An ellipsometer, comprising a light source (11), a polariser (13) adapted to polarise from the light source, means for holding a specimen (14) in such a manner that polarised light from said polariser becomes incident to the specimen, a combination of an analyser (15) and light detector (17) disposed in the path of emergent light from said specimen in response to said incident light, characterised in that said light source (11) emits white light and a spectroscope (16) is disposed in an optical path of the light to measure a wavelength at which a phase difference of O or π is produced between s-direction and p-direction components of light which has impinged on said specimen (14).

2. An ellipsometer as set forth in Claim 1, wherein said emergent light is reflected light from said specimen (14) to be held by said specimen holding means.

3. An ellipsometer as set forth in Claim 1, wherein said emergent light is light transmitted through said specimen (14) to be held by said specimen holding means.

4. An ellipsometer as set forth in Claim 1, 2 or 3, wherein said spectroscope (16) is disposed between said analyser (15) and swid light detector (17).

5. An ellipsometer as set forth in any preceding Claim, wherein said spectroscope is a spectrometer.

6. An ellipsometer as set forth in any preceding Claim, wherein said ellipsometer further comprises a collimator (12) disposed between said light source (11) and said polariser (12).

7. An ellipsometer as set forth in any one of the preceding Claims, including a telescope disposed on the path of incident light to said light detector.

8. An ellipsometer as set forth in any one of the preceding Claims wherein the light source (11) emits electromagnetic waves of a range covering ultraviolet, visible and infra red rays.

9. A method of use of the ellipsometer accocding to any one of the preceding Claims, comprising the step of operating the ellipsometer to subject the specimen (14) to polarised light from the ligth source and characterised by the steps of operating the spectroscope to measure a wavelength at which a phase difference of O or π is produced between s-direction and p-direction components of light from the specimen and determining the complex amplitude relative attenuation at that measured wavelength.

10. A method as set forth in Claim 9, wherein said specimen is a thin film, in particular a thin film of magnesium fluoride, in particular a thin film of magnesium fluoride deposited on glass substrate.

**Patentansprüche**

1. Ellipsometer, das eine Lichtquelle (11), einen Polarisator (13), der zum Polarisieren von Licht von der Lichtquelle geeignet ist, Einrichtungen, die ein Objekt (14) derart halten, daß polarisiertes Licht vom Polarisator zum Einfallen auf das Objekt gebracht wird, und eine Kombination eines Analysators (15) sowie Lichtempfängers (17), die im Weg des vom Objekt in Abhängigkeit vom genannten einfallenden Licht austretenden Lichts angeordnet ist, umfaßt, dadurch gekennzeichnet, daß die Lichtquelle (11) weißes Licht aussendet und ein Spektroskop (16) in einem Strahlengang des Lichts angeordnet ist, um eine Wellenlänge des Lichts, das auf das Objekts (14) aufgetroffen ist, bei welcher ein Phasenunterschied von O oder π zwischen s-Richtung und p-Richtungkomponenten erzeugt wird, zu messen.

2. Ellipsometer nach Anspruch 1, wobei das genannte austretende Licht vom durch die Objekt-Halteeinrichtungen zu haltenden Objekt (14) reflektiertes Licht ist.

3. Ellipsometer nach Anspruch 1, wobei das genannte austretende Licht durch das durch die Objekt-Halteeinrichtungen zu haltende Objekt (14) durchfallendes Licht ist.

4. Ellipsometer nach Anspruch 1, 2 oder 3, wobei das Spektroskop (16) zwischen dem Analysator (15) und dem Lichtempfänger (17) angeordnet ist.

5. Ellipsometer nach irgendeinem vorhergehenden Anspruch, wobei das Spektroskop ein Spektrometer ist.

6. Ellipsometer nach irgendeinem vorhergehenden Anspruch, wobei das Ellipsometer des weiteren einen zwischen der Lichtquelle (11) und dem Polarisator (13) angeordneten Kollimator (12) umfaßt.

7. Ellipsometer nach einem der vorhergehenden Ansprüche, das ein am Weg des auf den Lichtempfänger einfallenden Lichts angeordnetes Teleskop enthält.

8. Ellipsometer nach einem der vorhergehenden Ansprüche, wobei die Lichtquelle (11) elektromagnetische Wellen eines ultraviolette, sichtbare und infrarote Strahlen erfassenden Bereichs aussendet.

9. Verfahren zur Verwendung eines Ellipsometers nach einem der vorhergehenden Ansprüche, das den Schritt des Betreibens des Ellipsometers, um das Objekt (14) polarisiertem Licht von der Lichtquelle auszusetzen, umfaßt und gekennzeichnet ist durch die Schritte des Betätigens des Spektroskops, um eine Wellenlänge zu messen, bei der ein Phasenunterschied von O bis π zwischen s-Richtung- sowie p-Richtungkomponenten eines Lichts vom Objekt erzeugt wird, und des Bestimmens der komplexen relativen Amplitudenabschwächung bei dieser gemessenen Wellenlänge.

10. Verfahren nach Anspruch 9, wobei das Objekt eine dünne Schicht aus Magnesiumfluorid, insbesondere eine dünne Schicht aus auf einem Glassubstrat niedergeschlagenem Magnesiumfluorid ist.

**Revendications**

1. Ellipsomètre, comportant une source de lumière (11), un polariseur (13) apte à polariser la lumière délivrée par la source de lumière, des moyens pour maintenir un échantillon (14) de manière que la lumière polarisée provenant dudit polariseur tombe sur l'échantillon, un ensemble combiné formé d'un analyseur (15) et d'un détecteur de lumière (17), disposé dans le trajet de la lumière sortant dudit échantillon en réponse à ladite lumière incidente, caractérisé en ce que ladite source de lumière (11) émet une lumière blanche et qu'un spectroscope (16) est disposé dans un trajet optique de la lumière pour mesurer une longueur d'onde, pour laquelle une différence de phase égale à O ou π est produite entre les composants, qui s'étendent dans la direction s et dans la direction p, de la lumière qui a rencontré ledit échantillon (14).

2. Ellipsomètre selon la revendication 1, dans lequel ladite lumière sortante est une lumière réfléchie par ledit échantillon (14), qui doit être maintenu par lesdits moyens de maintien de l'échantillon.

3. Ellipsomètre selon la revendication 1, dans lequel ladite lumière sortante est une lumière transmise par ledit échantillon (14), qui doit être maintenu par lesdits moyens de maintien de l'échantillon.

4. Ellipsomètre selon la revendication 1, 2 ou 3, dans lequel ledit spectroscope (16) est disposé entre ledit analyseur (15) et ledit détecteur de lumière (17).

5. Ellipsomètre selon l'une quelconque des revendications précédentes, dans lequel ledit spectroscope est un spectromètre.

6. Ellipsométre selon l'une quelconque des revendications précédentes, dans lequel ledit ellipsomètre comporte en outre un collimateur (12) disposé entre ladite source de lumière (11) et ledit polariseur (12).

7. Ellipsomètre selon l'une quelconque des revendications précédentes, comportant une lunette disposée sur le trajet de la lumière tombant sur ledit détecteur de lumière.

8. Ellipsomètre selon l'une quelconque des revendications précédentes, dans lequel la source de lumière (11) émet des ondes électromagnétiques dans une gamme englobant le rayonnement ultraviolet, la lumière visible et le rayonnement infrarouge.

9. Procédé pour utiliser l'ellipsomètre selon l'une quelconque des revendications précédentes, incluant l'étape consistant à faire fonctionner l'ellipsomètre de manière à soumettre l'échantillon (14) à une lumière polarisée délivrée par la source de lumière, et caractérisé par les étapes consistant à faire fonctionner le spectroscope de manière à mesurer une longueur d'onde, pour laquelle une différence de phase égale à O ou π est produite entre les composantes, qui s'étendent dans la direction s et dans la direction p, de la lumière provenant de l'échantillon, et à déterminer l'atténuation relative d'amplitude complexe pour la longueur d'onde mesurée.

10. Procédé selon la revendication 9, selon lequel ledit échantillon est une pellicule mince, en particulier une pellicule mince de fluorure de magnésium, notamment une pellicule mince de fluorure de magnésium déposée sur un substrat en verre.

# FIG.1

# FIG.2

## PRIOR ART

1

## FIG.3

## FIG.4

FIG.5

## FIG.6

## FIG.7

4

## FIG.8

MgF₂/BK7

Refractive Index n →

1.42

1.40

1.38

300   400   500   600 (nm)

Wavelength λ (nm) →

## FIG.9

$$d = \frac{m \cdot \lambda m}{4\sqrt{n^2 - \sin^2 \phi}}$$

Thickness df (mm) →

300   400   500   600 (nm)

Wavelength λ (nm) →